# EUROPEAN PATENT APPLICATION

(11) **EP 2 503 472 A1**
(43) Date of publication of application: **26.09.2012**
(21) Application number: 11159663.1
(22) Date of filing: 24.03.2011
(51) Int. Cl.: G06F 17/30

(54) **Method and device for providing a dataset representative of a glossary**

(71) Applicant: FRANCE TELECOM, 75015 Paris (FR)
(72) Inventor: Antoine, Stéphane, LONDON, W45XS (GB); Duda, Adrian, LONDON, E17 7BT (GB)
(74) Representative: Bonnans, Arnaud

(57) **Abstract**

A method and device for providing a dataset representative of a glossary comprising one or more text units from a body of text generated by a word processor and a respective definition term for the or each text unit, the method comprising: selecting (S101) at least one text unit in the body of text; indicating (S102) that the or each text unit is to be associated with a respective definition term; retrieving (S103) from the body of the text, the or each text unit indicated for association with a definition term; providing (S105), for the or each text unit, a respective definition term defining the said text unit; and generating (S106) for storage in a memory, a dataset containing each indicated text unit and its associated definition term.

## Description

The present invention concerns a method and a device for providing a dataset representative of a glossary for a body of text.

As language in various fields such as technology, medicine and economics continues to evolve in complexity, the use of acronyms is becoming increasing common. Many documents generated by word processing software include an ever increasing number of acronyms. In order to inform the reader of the meaning of acronyms in a document, the document is often provided with a glossary. In order to create such a glossary an author or editor of a document typically manually inputs one by one the meanings of acronyms in the document while typing up the document.

Some word processing software packages propose constructing glossaries setting out the meanings of terms and acronyms used in a document. Such solutions typically use complex probabilistic methods to determine whether or not a word in the body of a text is likely to be an acronym. Other software packages use spell-checking techniques in which if a word is not spelled correctly, the software deducts that it is likely to be an acronym. Other proposed solutions make use of external acronym dictionaries. However, such techniques can lead to the introduction of erroneous and inaccurate definitions since one acronym can mean various things depending on the field of study.

Some text editors such as Latex automate the creation of a glossary for text edited documents. However, such methods can be cumbersome. For example, in Latex, the editor of a document has to create a glossary file and to instruct the latex software to use the glossary package. The editor then has to manually enter all the glossary entries using a specific "latext" structure and compile all the files including the glossary file to finally generate a PDF file of the document with the glossary.

Currently, there is no way of automatically creating a glossary in commercial word processing software packages such as Microsoft Word™. In Microsoft Word™, for example, a user has to manually go through the document, check which text units are acronyms, and then manually create a glossary page in order to add the respective acronym. If alphabetical order is desired, then the user has to manually find the right position in the list where the acronym should be inserted. Finally the user has to go back to where he was in the text and search manually for more acronyms from that point on. This process is both cumbersome and time consuming.

The present invention has been devised to with the foregoing in mind.

According to a first aspect of the invention there is provided a method of providing a dataset comprising one or more text units from a body of text generated by a word processor and a respective definition term for the or each text unit, the method comprising: selecting at least one text unit in the body of text; indicating that the or each text unit is to be associated with a respective definition term; retrieving from the body of the text, the or each text unit indicated for association with a definition term; providing for the or each text unit, a respective definition term defining the said text unit; and generating for storage in a memory, a dataset containing each indicated text unit and its associated definition term. The dataset may be representative of a glossary.

Accordingly, a new glossary may be generated for a document or an existing glossary of a document may be updated in a simplistic manner.

In one particular embodiment the step of indicating that the or each text unit is to be associated with a respective definition term comprises marking the or each text unit in the body of text, and the step of retrieving the or each text unit comprises scanning the body of the text and retrieving each marked text unit in response to a user request. The process of tagging the text units enables the text units to be automatically retrieved from the body of text and inserted into a glossary dataset.

In some embodiments the step of providing a respective definition term is performed after all of the marked text units have been retrieved from the body of text. In alternative embodiments the respective definition term may be provided each time a text unit is retrieved from the body of text. The step of providing a definition term may include inputting a user definition by means of a user interface. In other embodiments the step of providing a definition term may comprise accessing an electronic dictionary providing one or more definition terms for the respective text unit; selecting a definition term for the text unit from among the one or more definitions; and associating the selected definition term with the text unit.

In a particular embodiment the dataset is provided on a new page of a document file comprising the body of text.

According to a second aspect of the invention there is provided a method of generating a dataset representative of a glossary for a target body of text accessing a source glossary dataset representative of a glossary generated for a source body of text ; identifying within the target body of text, at least one text unit corresponding to a respective text unit in the source glossary dataset having an associated definition term; and generating a target glossary dataset for the target body of text comprising each identified text unit in the target body of text and the associated definition term from the source glossary dataset. The source glossary data set may be a glossary data set generated in accordance with the method of an embodiment of the invention.

According to a third aspect of the invention there is provided a method of inserting a definition of a text unit into a body of text generated by a word processor, the method comprising accessing a glossary dataset generated for the body of text; identifying, within the body of text, at least one text unit corresponding to a respective text unit in the data set having an associated definition term; and adding, into the body of text, the respective definition term associated with the or each text unit in the dataset. The glossary data set may be a glossary data set generated in accordance with the method of an embodiment of the invention.

According to a fourth aspect of the invention there is provided a device for providing a dataset comprising one or more text units from a body of text generated by a word processor and a respective definition term for the or each text unit, the device comprising: a display for displaying the body of text; a user interface for inputting characters to the body of text; selection means for selecting at least one text unit in the body of text; indication means indicating that the or each text unit is to be associated with a respective definition term; retrieval means for retrieving from the body of the text, the or each text unit indicated for association with a definition term; definition means for providing for the or each text unit, a respective definition term defining the said text unit; and dataset generation means for generating, for storage in a memory, a dataset containing each indicated text unit and its associated definition term. The dataset may be representative of a glossary.

In a particular embodiment the indication means is configured to mark each text unit in the body of text to be associated with a respective definition term; and the retrieval means is configured to scan the body of the text and retrieve each marked text unit in response to a user request.

In an embodiment the definition means is operable to access an electronic dictionary providing one or more definition terms for the respective text unit; select a definition term for the text unit from among the one or more definition terms; and associate the selected definition term with the text unit.

In a further embodiment the device further includes means for accessing a source glossary dataset representative of a glossary generated for a source body of text; means for identifying, within the target body of text, at least one text unit corresponding to a respective text unit in the source glossary dataset having an associated definition term; and means for generating a target glossary dataset for the target body of text comprising each identified text unit in the target body of text and the associated definition term from the source glossary dataset. The source glossary data set may be a glossary data set generated in accordance with the method of an embodiment of the invention.

In a particular embodiment of the invention the text unit is an acronym. In other embodiments the text unit may be comprise one or more textual characters (alphanumerical or others), one or more words etc.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:-
Figure 1 is a schematic diagram of a user terminal device in which one or more embodiments of the invention may be implemented;
Figure 2 is a block diagram illustrating elements of the user terminal device of Figure 1;
Figure 3 is a flow chart illustrating steps of a method of providing a data set representing a glossary according to a first embodiment of the invention;
Figure 4 is an example of a screen displayed on the user terminal during the method of the first embodiment of the invention;
Figure 5 is an example of a glossary constructed in accordance with the method of the first embodiment of the invention;
Figures 6A and 6B are examples of a pop-up screen displayed on the user terminal during the method of a second embodiment of the invention; and
Figure 7 is a flow chart illustrating steps of a method of providing a data set representing a glossary according to a further embodiment of the invention.

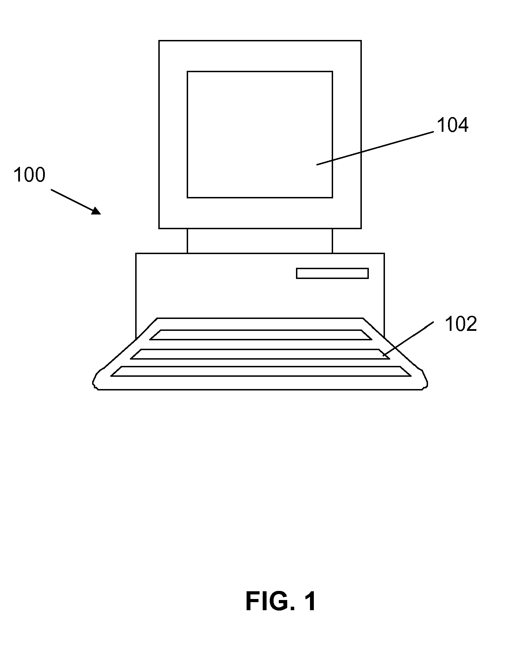

Figure 1 schematically illustrates a non-limiting example of a user terminal device 100 in which one or more embodiments of the invention may be implemented. The device 100 comprises a keyboard 102 for inputting text under the control of a word processing software package and a display 104 for displaying the text being created or edited. In other embodiments of the invention the keyboard 102 may be any form of suitable user interface such as a touch pad keyboard displayed on the display 104.

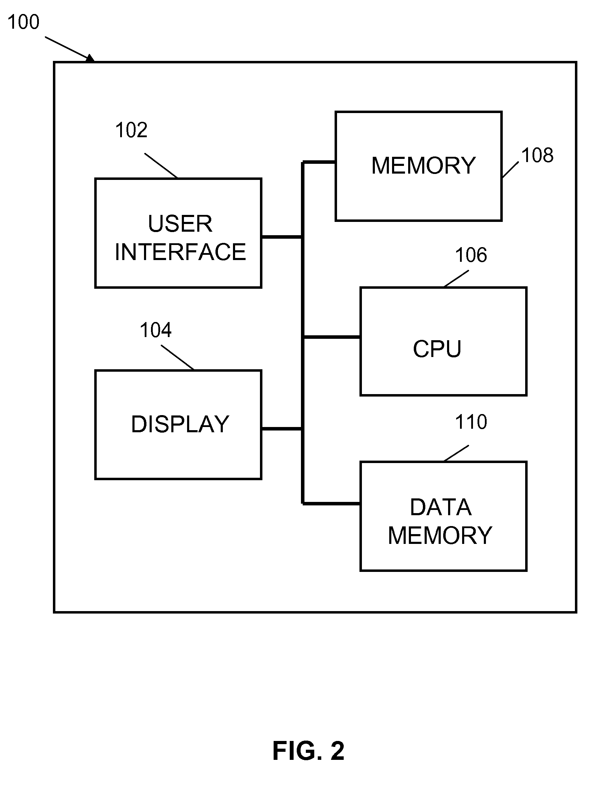

Figure 2 is a block diagram illustrating some of the components of the user terminal device 100. The user terminal device comprises a central processing unit (CPU) 106 configured to execute instructions from a program ROM (not shown) on powering up of the device 100, and to execute instructions relating to software applications of the device 100. Such software applications may include a word processing software application for creating and editing text documents, as well as a software application for implementing methods according to embodiments of the invention. It will be appreciated that the software application for implementing embodiments of the invention may be integrated into a word processing package as an add on or provided as a separate software package compatible to operate with the word processing software package. The instructions of the various software applications may be read by the CPU 106 from a main memory 108 after powering up of the device 100. The main memory 108 may be a Random Access Memory (RAM) operating as a working area of the CPU 106. Instructions of a software application may be loaded into the main memory 108 from a hard-disc (not shown) or the program ROM for example. A software application in accordance with embodiments of the invention, when executed by the CPU 106, causes the steps of one or more methods of embodiments of the invention to be performed on the device. A data memory 110 is configured to store data representative of a glossary generated by methods of the embodiments of the invention and documents created and edited by the word processing package. The data representative of the glossary may be stored as part of the content of the document containing the body of text with which it is associated.

The device 100 further includes the user interface 102 for receiving instructions input by a user for controlling execution of software instructions by the CPU 102 and the display 104 for displaying documents created or edited by the user.

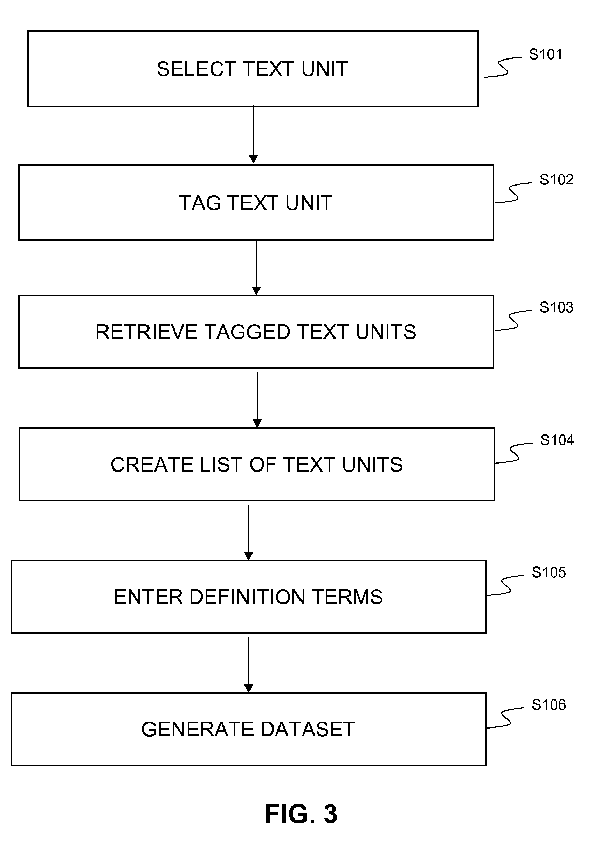

A method of providing a dataset representative of a glossary according to a first embodiment of the invention will now be described with reference to the flow chart illustrated in Figure 3. In the embodiment of Figure 3 the text units are acronyms. It will be appreciated, however, that in alternative embodiments of the invention the text unit may comprise one or more text characters, a word or multiple words whose meaning is to be defined. For example, in some embodiments of the invention the text unit may be a non-English word and the definition may be an English translation of the word.

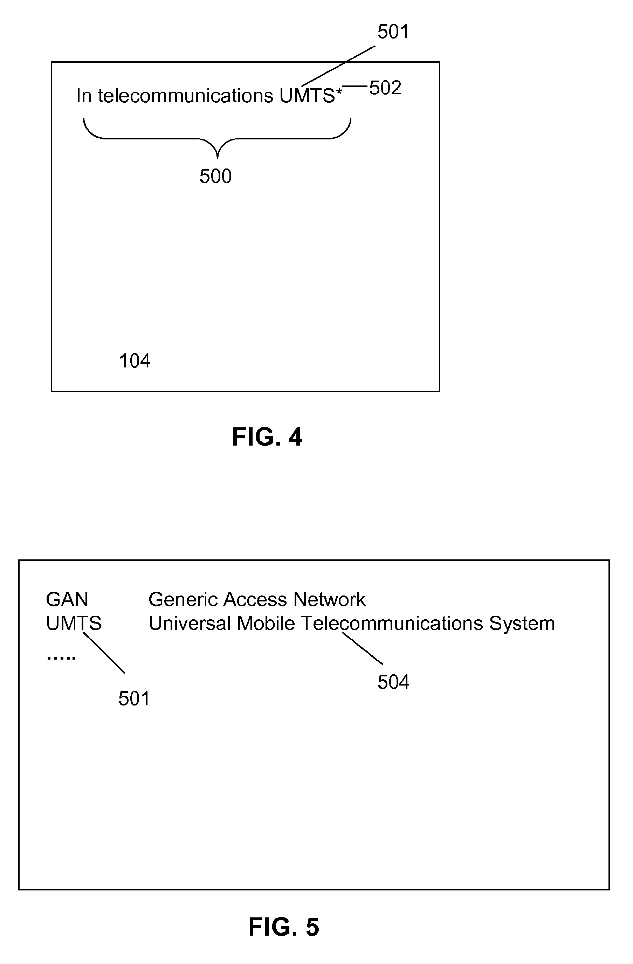

A user inputs characters using a keyboard 102 and word processing software to create a body of text 500 in a document displayed on display 104 as illustrated in Figure 4. In step S101 the user selects an acronym from the inputted text, for example the acronym 501 "UMTS". Next in Step S102 the user enters a special character 502 after completing input of the acronym in order to indicate that the acronym is to be provided with a definition term defining the acronym. For example, the user may press the "Shift" key of the keyboard 102, or any other key such as the * key to tag the acronym. In other embodiments of the invention the acronym may be tagged, for example, by right clicking on a cursor control device such as a computer mouse. The general idea is to enable a software tool to recognize that the tagged word is a text unit to be defined in a glossary. In this way, the software tool will know that all the text units which are followed by the special character represent text units to be defined.

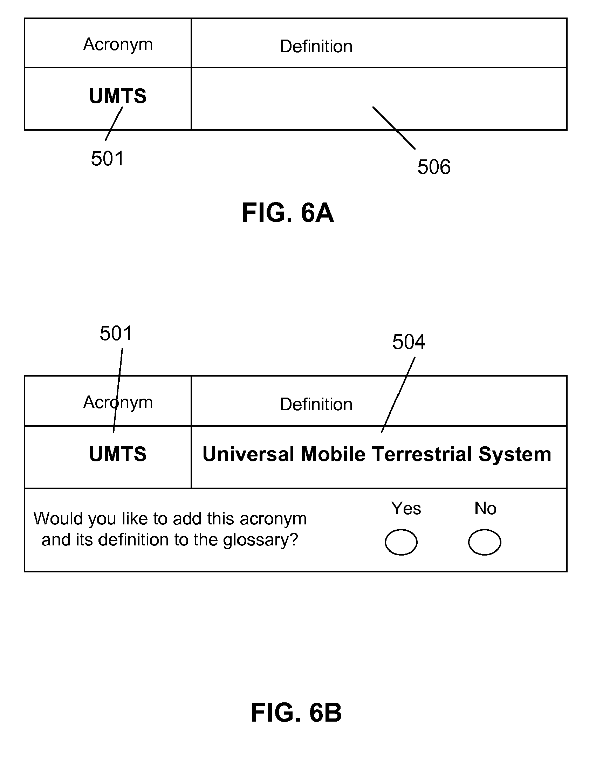

When the user finishes writing the body of text and wishes to construct a glossary defining the tagged acronyms, the document is automatically scanned to identify all of the text units within the body of text which have been tagged. For example in this particular embodiment each text unit followed by the special character will be identified. In step S104 the tagged text units are retrieved from the body of text. In this particular embodiment a new page is created in the document containing the body of text, and the identified text units are added to that page, one after the other, line by line to create a list of text units in Step S104. If desired the text units may be automatically arranged in the list in alphabetical order. Once the list has been created, the user can go to that page, and enter the synonyms corresponding to each of the listed acronyms in step S105; In step S106 a glossary dataset is this generated as illustrated in Figure 6. The generated dataset comprises a set of text units 501, in this case acronyms, identified in the body of text generated by a word processor, each text unit being associated with a respective definition term 504 defining the meaning of the text unit.

When the user wishes to update the body of text, for example by adding a new acronym or by deleting one, the glossary creating tool can be run again in order to update the list of acronyms accordingly.

The present solution aims to facilitate the user task of creating a glossary for acronyms in a document created by a word processing package. The list of acronyms may be created and updated in real time by way of a glossary construction function that the user may activate whenever he chooses to add a word or acronym to the glossary as he goes through the text document. The glossary construction function performs the role of adding a word or acronym to a glossary stored in a designated place of the document.

In a second embodiment of the invention the process of adding a corresponding definition of a text unit in a body of text may be performed for each text unit when the respective text unit is selected for addition to the glossary. In this embodiment the process of storing a text unit in the glossary involves the user action of selecting a text unit within the body of text that he designates as an acronym. The selection can be done manually by clicking on the text unit. Once the selection of the designated acronym has been performed, the user invokes a glossary construction function that will display an interface enabling the user to enter the definition of the acronym. The interface may be provided in the form of a small pop up window displaying the acronym selected by the user and a blank space for the user to type in the definition intended for the acronym. Figure 6A illustrates as an example a pop-up window that appears on the display 104 and contains the acronym UMTS 501 that the user has just selected in the body of text. The pop up window appears after selection of the acronym in the text and activating the function. Activating the function can be done for example by right clicking on the selected acronym and selecting an instruction such as "add to glossary". Next, in Step S203 the user may type in the definition 504 of the acronym in the blank space 506 provided on the pop up window.

Figure 6B illustrates an example of a pop-up window after the user has just typed in the acronym definition. The user is given the option of adding the acronym and its definition directly to the glossary by replying "yes" to the question 505 attached to the pop up window. This question is to confirm the intention of the user to add the acronym 501 and its definition 504 to the glossary lest he changes his mind. Upon responding "Yes" to the question, the acronym and its definition are added simultaneously to the glossary in alphabetical order. It will be appreciated that in alternative embodiments the text unit and the definition of the text unit may be directly stored once the definition is provided without confirming the intentions of the user.

In further embodiments of the invention solutions are proposed which enable a target document containing a body of text to use the glossary of a source document containing a body of text to generate a target dataset representative of a glossary.

Accordingly, in further embodiments of the invention, a target document including a body of text for which a glossary is to be constructed or updated is associated with a source document provided with a glossary in order to generate a glossary for the target document. In one particular embodiment a target document file placed in a folder where other text document files with a glossary exist. The glossary of at least one of the other documents may be created according to the embodiments of the invention described above. The folder may be a project folder containing several documents of the same project or field and, hence likely to contain the same type of acronyms or other word units. In this embodiment a text unit identification function is implemented that identifies text units within a target document which already appear in the glossaries of other documents in the same folder. If a text unit such as an acronym contained in the target document also appears in the text unit glossary list of another document of the same folder, then the acronym list of the target document is updated with the acronym and its respective definition from the glossary of the source document.

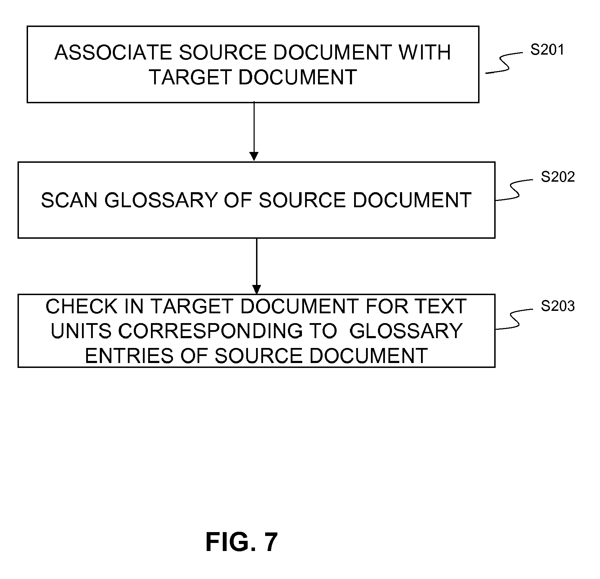

In this embodiment the glossary construction may be implemented using, for example, Visual Basic (VBA) in a word processing software such as Word™. With reference to Figure 7, a method for constructing a glossary in accordance with the further embodiment of the invention performs the following steps:
Firstly, in step S201 a source document is associated with the target document. The source document file may be located in the same folder as the target document file. The source document may be selected by the user or the software tool may automatically select a document according to the file name of the source document and the target document, for example. Both the target document and the source document are opened. The glossary of the target document glossary is to be created or updated while the glossary of the source document is to be used for creating or updating the target document glossary.
In step S202 the glossary of the source document is scanned. For each text unit entry of the source document glossary, the program checks if the same text unit appears in the text body of the target document, or in a glossary of the target document if the target document already has a glossary. If the text unit exists in the target document body but is not in the target document glossary, then the target document glossary is updated with the text unit and its definition term is provided by the glossary of the source document. Step S203 is repeated for each text entry in the source document glossary. The source document file can then be closed and another document source file may then be opened and steps S202 and S203 repeated to further update the glossary of the target document.

When the process is completed, it may be the case that the glossary of the current document is not completely updated, for example there may be further text units in the body of the target document which have not yet been defined. The user may then attempt to further update the glossary of the target document by implementing the method according to any of the previously described embodiments.

In some embodiments of the invention the definitions associated with the respective text units may be added to the body of the text of the document or of any other document. In such a case the body of the text to which the definitions are to be added can be scanned. Any text units corresponding to text units appearing in the constructed glossary may be identified. In some embodiments the text units to which a definition is to be added may be identified since they have been previously tagged as described above, while in other embodiments the text units may be identified in accordance with known word recognition techniques. The associated definition of the text unit can then added to the body of text at the place of the respective text unit - the definition may appear in addition to the text unit or may replace a text unit.

Although the present invention has been described hereinabove with reference to specific embodiments, the present invention is not limited to the specific embodiments, and modifications will be apparent to a skilled person in the art which lie within the scope of the present invention.

For instance, while in the foregoing examples have been described with respect to the construction of a glossary for acronyms, the invention may be applied to the construction of a glossary for other types of words or characters.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of providing a dataset representative of a glossary comprising one or more text units from a body of text generated by a word processor and a respective definition term for the or each text unit, the method comprising:
selecting (S101) at least one text unit in the body of text;
indicating (S102) that the or each text unit is to be associated with a respective definition term;
retrieving (S103) from the body of the text, the or each text unit indicated for association with a definition term;
providing (S105), for the or each text unit, a respective definition term defining the said text unit; and
generating (S106) for storage in a memory, a dataset containing each indicated text unit and its associated definition term.

2. A method according to claim 1, wherein the step of indicating that the or each text unit is to be associated with a respective definition term comprises marking the or each text unit in the body of text, and the step of retrieving the or each text unit comprises scanning the body of the text and retrieving each marked text unit in response to a user request.

3. A method according to claim 2, wherein the step of providing a respective definition term (S105) is performed after all of the marked text units have been retrieved from the body of text.

4. A method according to claim 1 or 2, wherein the step of providing a respective definition term (S105) is performed each time a text unit is retrieved from the body of text.

5. A method according to any one of the preceding claims wherein the step of providing a definition term comprises inputting a user definition by means of a user interface.

6. A method according to any one of claims 1 to 4, wherein the step of providing a definition term comprises
accessing an electronic dictionary providing one or more definition terms for the respective text unit;
selecting a definition term for the text unit from among the one or more definitions; and
associating the selected definition term with the text unit.

7. A method according to any one of the preceding claims wherein the dataset is provided on a new page of a document file comprising the body of text.

8. A method of generating a dataset representative of a glossary for a target body of text
accessing a source glossary dataset (S201) representative of a glossary generated for a source body of text in accordance with the method of any one of claims 1 to 7;
identifying (S203), within the target body of text, at least one text unit corresponding to a respective text unit in the source glossary dataset having an associated definition term; and
generating a target glossary dataset for the target body of text comprising each identified text unit in the target body of text and the associated definition term from the source glossary dataset.

9. A method of inserting a definition of a text unit into a body of text generated by a word processor, the method comprising
accessing a glossary dataset generated for the body of text according to the method of any one of claims 1 to 8;
identifying, within the body of text, at least one text unit corresponding to a respective text unit in the data set having an associated definition term; and
adding, into the body of text, the respective definition term associated with the or each text unit in the dataset

10. A device (100) for providing a dataset representative of a glossary comprising one or more text units from a body of text generated by a word processor and a respective definition term for the or each text unit, the device comprising:
a display (104) for displaying the body of text;
a user interface (102) for inputting characters to the body of text;
selection means for selecting at least one text unit in the body of text;
indication means indicating that the or each text unit is to be associated with a respective definition term;
retrieval means for retrieving from the body of the text, the or each text unit indicated for association with a definition term;
definition means for providing for the or each text unit, a respective definition term defining the said text unit; and
dataset generation means for generating, for storage in a memory, a dataset containing each indicated text unit and its associated definition term.

11. A device according to claim 10, wherein the indication means is configured to mark each text unit in the body of text to be associated with a respective definition term; and the retrieval means is configured to scan the body of the text and retrieve each marked text unit in response to a user request.

12. A device according to any one of claims 10 or 11, wherein the definition means is operable to
access an electronic dictionary providing one or more definition terms for the respective text unit;
select a definition term for the text unit from among the one or more definition terms; and
associate the selected definition term with the text unit.

13. A device according to any one of claims 10 to 12, further comprising means for accessing a source glossary dataset representative of a glossary generated for a source body of text in accordance with the method of any one of claims 1 to 7;
means for identifying, within the target body of text, at least one text unit corresponding to a respective text unit in the source glossary dataset having an associated definition term; and
means for generating a target glossary dataset for the target body of text comprising each identified text unit in the target body of text and the associated definition term from the source glossary dataset.

14. A method or device according to any one of the preceding claims, wherein the text unit is an acronym.

15. A computer program product for a programmable apparatus, the computer program product comprising a sequence of instructions for implementing a method according to any one of claims 1 to 9 when loaded into and executed by the programmable apparatus.
